# EUROPEAN PATENT APPLICATION

(11) **EP 4 071 901 A1**
(43) Date of publication of application: **12.10.2022**
(21) Application number: 20895577.3
(22) Date of filing: 13.11.2020
(51) Int. Cl.: H01M 50/20, H01M 50/342, H01M 50/50

(54) **BATTERY PACK**

(30) Priority: 03.12.2019 JP 2019218563
(71) Applicant: SANYO Electric Co., Ltd., Daito-shi Osaka 574-8534 (JP)
(72) Inventor: MATSUSHITA, Fumiya, Osaka-shi, Osaka 540-6207 (JP); MATSUBARA, Shota, Osaka-shi, Osaka 540-6207 (JP)
(74) Representative: Novagraaf International SA
(86) International application number: PCT/JP2020/042360
(87) International publication number: WO 2021/111844

(57) **Abstract**

A battery pack prevents a combustible substance from leaking to the outside of the battery pack through a drain hole opening in an outer case. The battery pack includes an outer case (10) and one or more battery cells housed inside the outer case (10). Each battery cell includes a safety valve. A drain hole is provided in a part of the outer case (10). The drain hole communicates with the inside of the outer case (10). A tubular body extends from the drain hole to the inside of the outer case (10). The tubular body has one opening end as the drain hole and another opening end as an internal communication port opening to the inside of the outer case (10). A wall portion is provided apart from the internal communication port in an extending direction with respect to the internal communication port. The extending direction is directed toward the internal communication port from the drain hole.

## Description

### TECHNICAL FIELD

The present invention relates to a battery pack.

### BACKGROUND ART

A battery pack is used as a power source for an electric assist bicycle, an electric motorcycle, an electric tool, an electric cleaner, and the like. In the battery pack, a large number of rechargeable battery cells are connected in series or in parallel, and are housed in an outer case. Such a battery pack is used not only indoors but also outdoors. In this type of battery pack, a through-hole opens in the outer case as a drain hole for discharging, to the outside, water unintentionally entering the outer case or as a discharge hole for discharging air in the outer case or a gas discharged from the battery to the outside (see PTL 1).

### CITATION LIST

### Patent Literature

PTL 1: Japanese Patent Laid-Open Publication No. 2006-196277

### SUMMARY OF THE INVENTION

### Technical Problem

In each battery cell housed in the outer case, a combustible substance, such as a combustible metal piece, may be released in addition to a high-temperature gas due to external stress, an electrical short circuit, or the like. In a case where such an event occurs, when the combustible substance released from the battery cell is output from the inside to the outside of the battery pack, the combustible substance may un desirably be ignited.

In the case that the battery pack has the drain hole for discharging water stored in the outer case to the outside of the case as described above, a release material may be released from the drain hole to the outside of the outer case.

An object of the present invention is to provide a battery pack that prevents a combustible substance from leaking to the outside of the battery pack through a drain hole opening in an outer case.

### Solution to Problem

A battery pack according to one aspect of the present invention is a battery pack that includes an outer case and one or more battery cells housed inside the outer case. Each battery includes a safety valve. A drain hole communicating with the inside of the outer case is provided in a part of the outer case. A tubular body extends to the inside of the outer case from the drain hole. One opening end of the tubular body is at the drain hole. Another opening end of the tubular body as an internal communication port opens to the inside of the outer case. A wall portion is provided apart from the internal communication port in an extending direction with respect to the internal communication port, the extending direction being directed toward the internal communication port from the drain hole.

### Advantageous effect of invention

Even though the safety valve of the battery cell opens and releases the high-temperature and high-pressure gas or the combustible substance from the valve, the tubular body and the wall portion block a path through the tubular body and prevents the combustible substance from being directly released from the drain hole to the outside of the battery pack while maintaining the configuration in which the water stored in the outer case is discharged to the outside through the drain hole, thus enhancing safety.

### BRIEF DESCRIPTION OF DRAWINGS

FIG. 1 is a perspective view of a battery pack according to an exemplary embodiment.
FIG. 2 is an exploded perspective view of the battery pack shown in FIG. 1.
FIG. 3 is an exploded perspective view of the battery pack shown in FIG. 2.
FIG. 4 is a transparent perspective view showing a part of the battery pack shown in FIG. 1 around a drain hole.
FIG. 5 is a perspective view of an outer case shown in FIG. 2 for showing an inner surface side of the outer case.
FIG. 6 is a bottom perspective view of the outer case shown in FIG. 5.
FIG. 7 is a cross-sectional perspective view of the outer case taken along line VII-VII shown in FIG. 6.
FIG. 8 is a cross-sectional view of the battery pack taken along line VIII-VIII shown in FIG. 1.
FIG. 9 is a cross-sectional view of a conventional battery pack.
FIG. 10 is a cross-sectional view of a battery pack according to a comparative example.
FIG. 11 is a cross-sectional view of the battery pack according to the exemplary
embodiment.

### DESCRIPTION OF EMBODIMENT

A battery pack according to an aspect of the present invention may have the following configurations in addition to the above-described configuration.

The tubular body has a rectangular tubular shape.

The tubular body and the wall portion are be formed integrally with the outer case.

The drain hole opens in a side surface of a lower part of the outer case.

The drain hole is provided in each of left and right side surfaces of the outer case, and the drain hole provided in each of left and right side surfaces includes the tubular body and the wall portion.

The battery pack further includes a battery holder holding the one or more battery cells at predetermined postures and plural lead plates electrically connected to a positive electrode terminal and a negative electrode terminal of each of the one or more battery cells on a side surface of the battery holder.

The safety valve is provided on a positive electrode terminal side of each of the one or more battery cells.

The exemplary embodiment of the present invention will be described below with reference to the accompanying drawings. However, the exemplary embodiment described below exemplifies a configuration that embodies the technical idea of the present invention, and the present invention is not limited to the following. Moreover, the members described in the claims are never specified as the members of the exemplary embodiment. In particular, the dimensions, materials, shapes, relative arrangements, and the like of the constituent members described in the exemplary embodiment are not intended to limit the scope of the present invention to the specific ones unless otherwise specified and are exemplary only. The sizes and positional relationships of the members illustrated in the respective drawings are sometimes exaggerated to clarify the explanation. Further, in the following description, the same names and reference numerals indicate the same or similar members, and detailed description will be appropriately omitted. Furthermore, respective elements constituting the present invention may be configured such that the plurality of elements are constituted of the same members to form one member that functions as a plurality of elements, or conversely, the function of one member can be shared and achieved by a plurality of members. In addition, the content described in some of examples and exemplary embodiments may be applicable to other examples and exemplary embodiments.

An example in which the battery pack described below is mainly used as a power supply device that supplies driving power to a motor for an electric assist bicycle will be described. The battery pack may be applied to a driving power supply of another power supply device, for example, an electric tool or an electric cleaner, or a driving power supply of an electric vehicle such as an electric scooter, an electric cart, or an electric automobile. Exemplary Embodiment 1

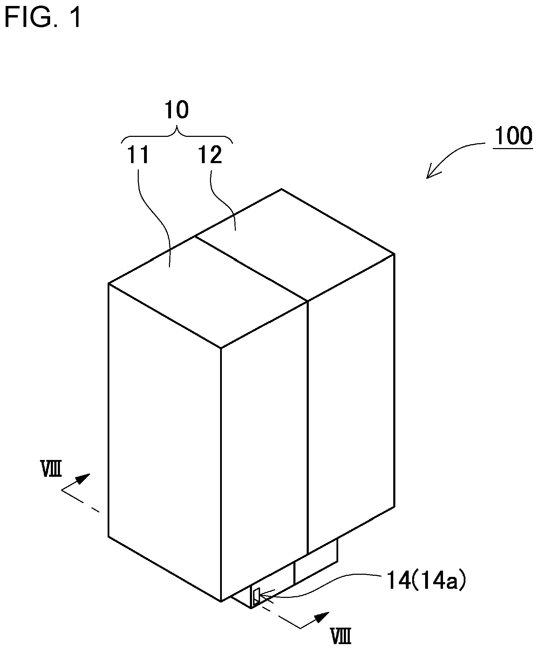

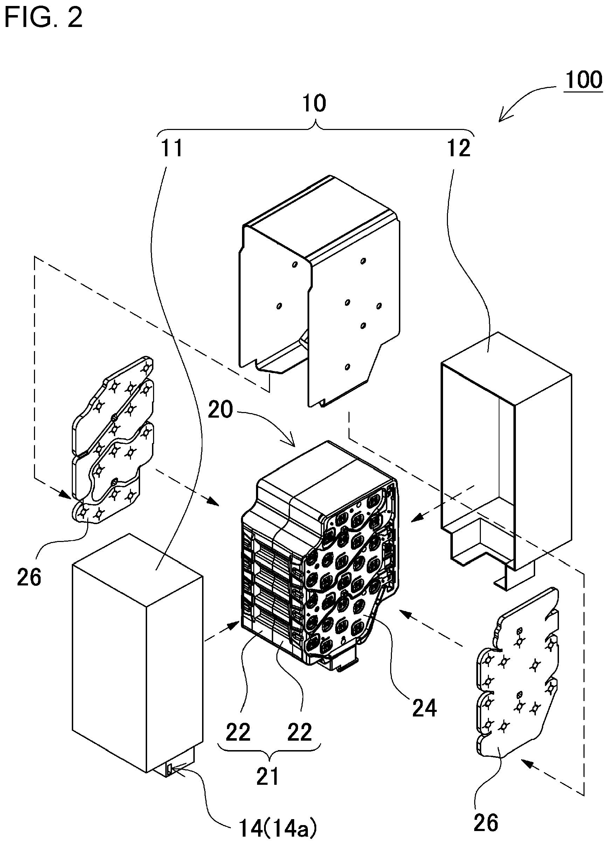

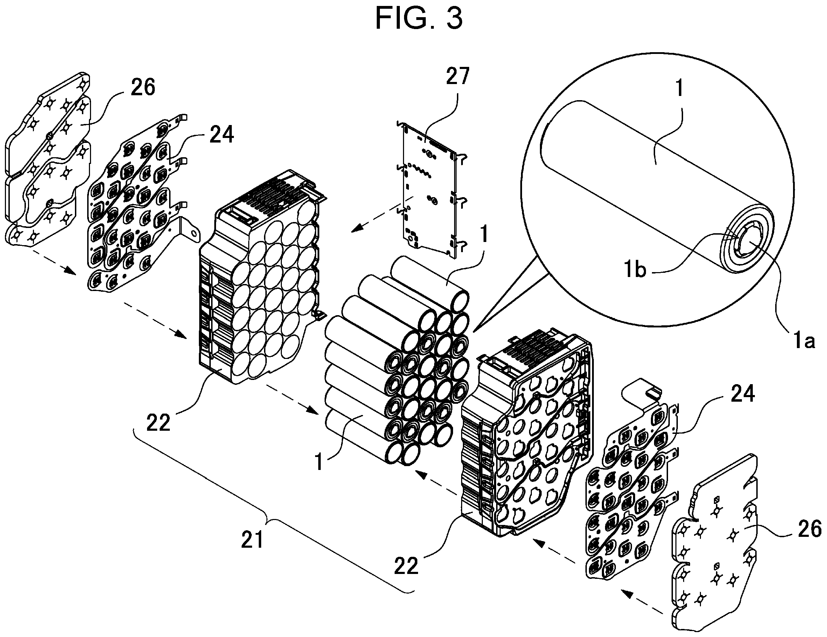

FIGS. 1 to 3 illustrate a battery pack according to Exemplary Embodiment 1. FIG. 1 is a perspective view of battery pack 100 according to the embodiment of the present invention. FIG. 2 is an exploded perspective view of battery pack 100 shown in FIG. 1. FIG. 3 is an exploded perspective view of the battery pack shown in FIG. 2. Battery pack 100 shown in these drawings includes battery assembly 20 housed in outer case 10. Battery assembly 20 includes one or more battery cells 1 and battery holder 21 holding battery cells 1. Battery holder 21 is configured to hold one or more battery cells 1 at fixed positions. In this example, plural battery cells 1 are held by battery holder 21. Each battery cell 1 includes an exterior can with a tubular shape extended in one direction. A safety valve configured to discharges gas when an internal pressure rises is provided on one end surface of the tubular shape of the exterior can.

### Outer Case 10

Outer case 10 houses battery holder 21 therein. Outer case 10 illustrated in FIGS. 1 and 2 includes first case 11 with a box shape and second case 12 with a box shape into which the case 10 is divided in front and rear directions. Cases 11 and 12 are connected to each other at opening end edges thereof, and hose battery holder 21 in insides thereof. Outer case 10 is molded with resin of insulating material, such as polycarbonate (PC) or polypropylene (PP). Outer case 10 may have any shape, such as a cylindrical shape, other than the illustrated box shape.

### Battery Assembly 20

Outer case 10 houses battery assembly 20 therein. Battery assembly 20 includes one or more battery cells 1 and battery holder 21 holding battery cells 1. As shown in FIGS. 2 and 3, in battery holder 21, plural battery cells 1 are arranged in postures parallel to one another while respective both ends of the cells are flush with one another. Lead plates 24 are connected to electrode terminals at both ends of each battery cell 1. Lead plate 24 is a current collecting terminal made of a metal plate or the like.

### Battery Cell 1

Battery cell 1 is a lithium ion battery with a cylindrical shape. Lithium ion batteries have a large capacity with respect to a size and a weight, and increase a total capacity of the battery pack. However, the battery pack of the present invention does not specify the battery cell as the lithium ion battery. As the battery cell, another rechargeable, secondary battery may be used. In battery pack 100 shown in FIG. 3, battery cell 1 is a cylindrical battery cell, but a rectangular battery cell may be used as the battery cell. Lead plates 24 are welded to the electrode terminals at both the ends of each battery cell 1 to connect adjacent battery cells 1 in series or in parallel.

In battery cell 1, discharge port 1b of the safety valve configured to open at a predetermined pressure is provided on an end surface of the cell. The safety valve is a discharge valve configured to open when the inside of the exterior can of battery cell 1 has a high pressure for some reason and discharges a substance, such as a high pressure gas or a metal piece, inside to the outside.

The electrode terminals are provided at both the ends of battery cell 1. In battery cell 1, an opening of the exterior can made of metal, such as aluminum, is air-tightly sealed with a sealing plate. A protrusion electrode is provided on the sealing plate to form a first electrode terminal, and a bottom surface of the exterior can is a second electrode terminal. Discharge port 1b of the safety valve is provided on the protrusion electrode side or is provided on the bottom surface of the exterior can. In this example, as shown in FIG. 3, the safety valve is provided on positive electrode 1a side of the electrode terminals of battery cell 1.

### Battery Holder 21

Battery holder 21 holds battery cells 1 in postures parallel to one another, such that battery cells 1 are arranged in a zigzag or matrix when viewed from a side surface of battery holder 21 while the electrode terminals are flush with one another. Battery holder 21 is divided into two, a pair of sub-holders 22, and holds battery cells 1 sandwiched between the pair of sub-holders 22 from the left and right. Each sub-holder 22 forms a housing cylinder that houses cylindrical battery cells 1. Battery holder 21 is made of material having excellent insulation properties, for example, resin, such as plastic. Circuit board 27 on which a charge and discharge circuit for controlling charge and discharge of battery cells 1, a protective circuit, and the like are mounted is arranged on one surface of battery assembly 20.

### Lead Plate 24

Lead plates 24 connect cylindrical battery cells 1 arranged in plural stages and plural rows in a predetermined arrangement to one another. Lead plates 24 connect cylindrical battery cells 1 in parallel, in series, or in series and in parallel to one another. Lead plate 24 connecting the end surfaces may be formed as one sheet, or may be divided into plural sheets on each side surface in which the end surfaces of battery cells 1 are arranged on the same plane,. Lead plate 24 is a metal plate and is electrically connected to end-surface electrodes of the cylindrical batteries by performing ultrasonic welding, resistance welding, or laser welding. In particular, when lead plate 24 is made of aluminum or aluminum alloy and the exterior can of the cylindrical battery is made of aluminum or aluminum alloy, since an electrical resistance of aluminum is low, connection by resistance welding becomes difficult. Thus, in such a case, lead plate 24 is welded to the end-face electrodes preferably by ultrasonic welding.

A fuse link that is melted by heat of a discharge gas injected from discharge port 1b upon the safety valve opening may be provided in lead plate 24. Lead plate 24 may form the fuse link by connecting a connecting part connected to the protrusion electrode and a main body of lead plate 24 with an elongated connecting part. In this structure, when the discharge gas is discharged, unintended energization or the like can be avoided to enhance safety by providing the fuse link that fuses lead plate 24.

### Heat Insulator 26

Heat insulator 26 may be disposed on lead plate 24. When the inside of any one of battery cells 1 has high pressure and the safety valve opens, heat insulator 26 functions as a backflow suppression layer that suppresses occurrence of catching fire due to scattering of a high-temperature and high-pressure gas and a combustible substance discharged from discharge port 1b of the safety valve and adhesion to another battery cell 1. Rubber such as chloroprene or a foam is suitably used for heat insulator 26.

### Drain Hole 14

Outer case 10 has drain holes 14 therein for discharging water stored therein to the outside. Drain holes 14 open to a side surface of the case configured to face a lower surface in a posture in which outer case 10 is in a use state, for example, in a posture in which battery pack 100 is set in a power supply apparatus. In the example of FIG. 1, since a portion protruding in a block shape is formed on the lower surface of outer case 10 and the block-shaped portion is positioned at a lowermost position in outer case 10, drain holes 14 open to a side surface of the block-shaped portion.

In the example of FIG. 1, drain holes 14 open to the left and right, and water is efficiently discharged from left and right drain holes 14a and 14b to the outside of outer case 10. However, in the present invention, the positions and the number of drain holes are not limited to this configuration. For example, the drain holes may open to front and rear side surfaces, may be opened at plural locations on left and right side surfaces, or may open to only one of the side surfaces.

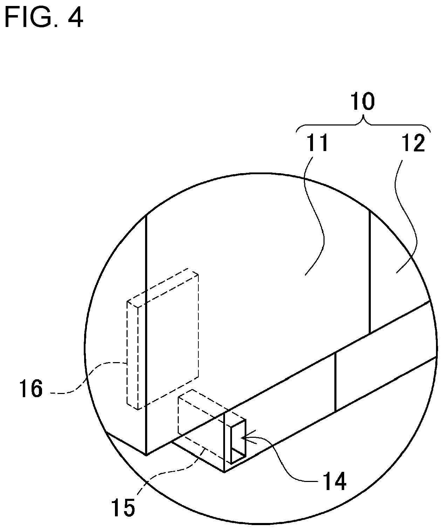

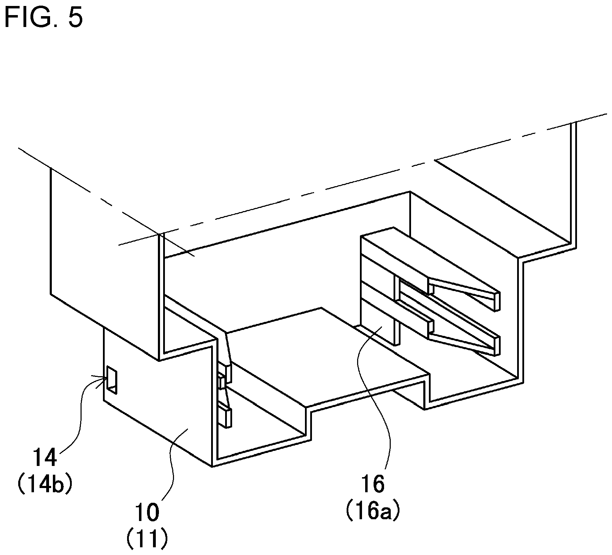

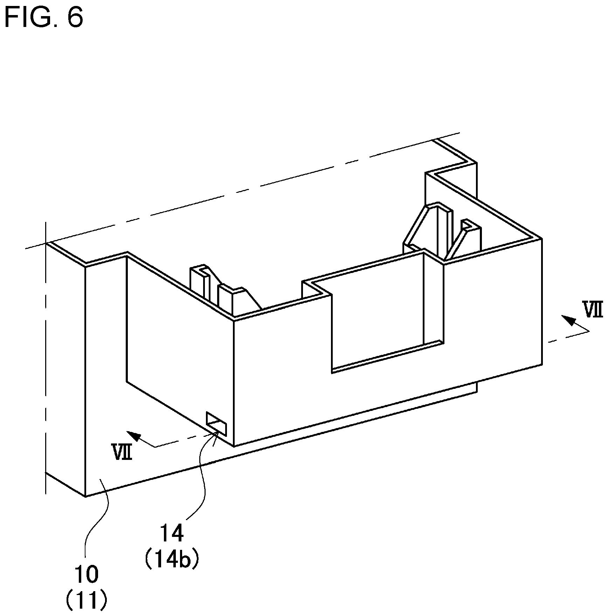

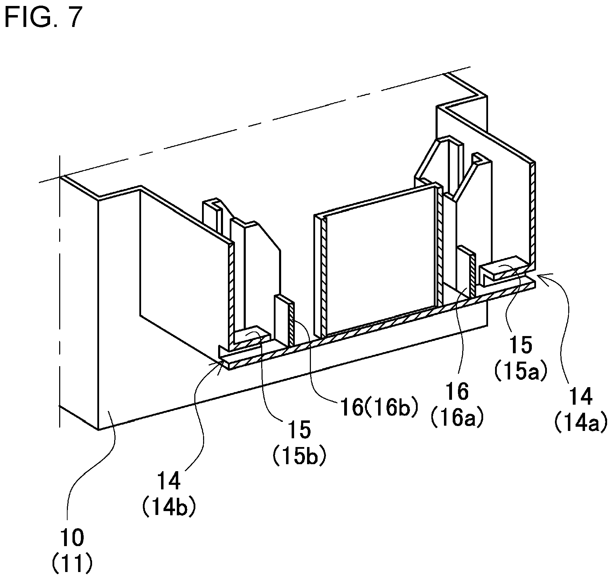

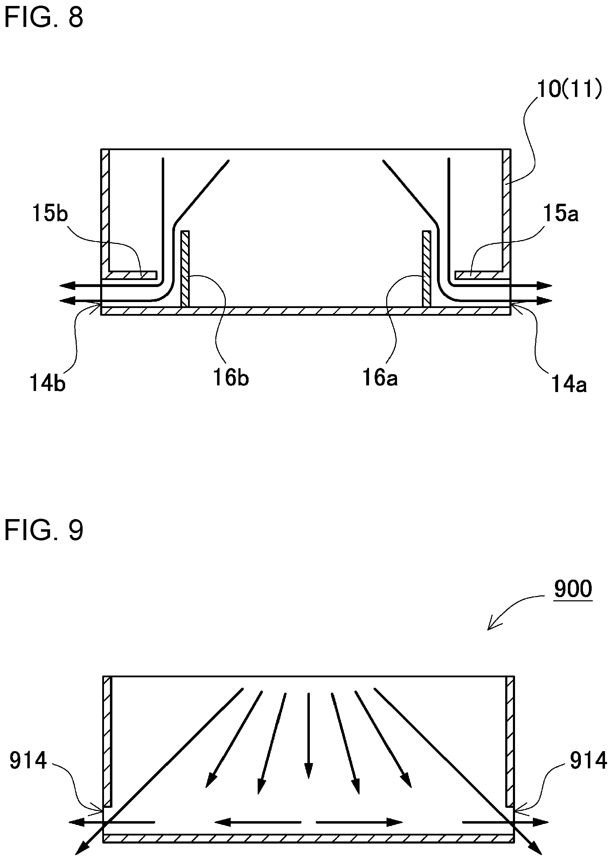

In battery pack 100 according to the present exemplary embodiment, tubular body 15 is provides inside outer case 10 to communicate with drain holes 14. Wall portion 16 is disposed at a position facing an inner communication port that is another opening end of tubular body 15. Outer case 10 is shown in FIGS. 4 to 8. FIG. 4 is a transparent perspective view of the case for showing a part around drain hole 14 of battery pack 100 shown in FIG. 1. FIG. 5 is a perspective view of the case for showing an inner surface side of outer case 10 shown in FIG. 2. FIG. 6 is a perspective view of outer case 10 shown in FIG. 5 when viewed from a bottom surface side. FIG. 7 is a cross-sectional perspective view of outer case 10 along line VII-VII shown in FIG. 6. FIG. 8 is a cross-sectional view of battery pack 100 taken along line VIII-VIII shown in in FIG. 1.

In a conventional battery pack, an internal pressure of a battery cell rises and a safety valve opens to release a combustible substance together with a high-temperature and high-pressure gas, the combustible substance may be directly released from drain hole 914 to the outside of battery pack 900 as shown in FIG. 9. At this moment, obtaining oxygen, the combustible substance may be ignited by a spark or the like to become a flame. On the other hand, it is conceivable to regulate an installation position and an installation posture of the battery cell from which the combustible substance may be released not to be directed toward drain hole 914. However, this method restricts an installation position and an installation posture of a battery holder or the like holding the battery cell, accordingly impairing a degree of freedom in design. Thus, the conventional battery pack is not preferable. Depending on a required specification of the battery pack, an arrangement direction of the battery cell and the battery holder may previously determined, and the battery cell and the battery holder may not be arranged not to face drain hole 914.

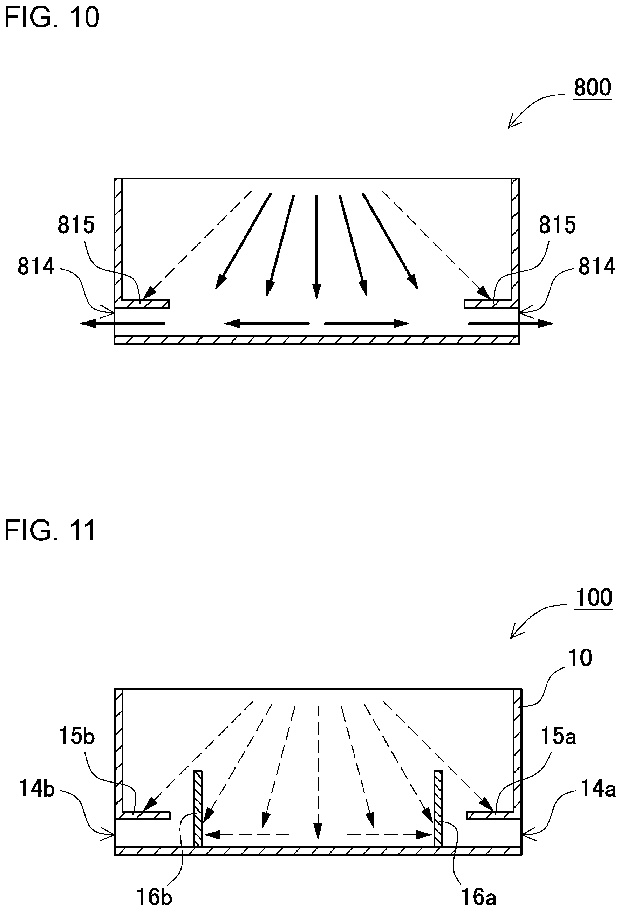

The inventors of the present invention examined a configuration of battery pack 800 shown in FIG. 10. In battery pack 800, tubular body 815 extends inside the exterior communicates with drain hole 814. Drain hole 814 has a posture opening only in a horizontal direction (lateral direction in FIG. 10). AS a result, even though the combustible substance flies from above, this configuration causes the combustible substance to be blocked by tubular body 815, and a situation in which the combustible substance is directly discharged from drain hole 814 to the outside is eliminated (an arrow indicated by a broken line in FIG. 10). In particular, since the combustible substance is a solid having a mass of fine metal particles or the like, straightness is strong as compared with a gas having no mass. Accordingly, the periphery of the opening end is covered with tubular body 815, and thus, it is possible to effectively block the combustible substance directly coming flying and to accumulate the combustible substance inside the outer case. On the other hand, the high-temperature and high-pressure gas easily changes a traveling direction as compared with a mass combustible substance, and can be released to the outside of battery pack 800 from drain hole 814. As a result, it is possible to avoid a situation in which the high-pressure gas accumulates and expands in the outer case. Drain hole 814 opens, and thus, the water stored in the outer case can still be discharged from drain hole 814.

However, in the state of FIG. 10, drain hole 814 covered with tubular body 815 opens only in the horizontal direction. When the combustible substance travels in the horizontal direction, the combustible substance is still discharged to the outside (an arrow indicated by a solid line in FIG. 10 indicates a flying direction of the combustible substance). Thus, in battery pack 100 according to the present exemplary embodiment, as shown in FIG. 11, wall portion 16a is provided at a position apart from the inner communication port in an extending direction with respect to the internal communication port, the extending direction being directed toward the internal communication port from the drain hole. Wall portion 16a prevents a progress along the extending direction of the inner communication port. Even though the combustible substance travels in the horizontal direction, this configuration prevents the combustible substance from being directly released from drain hole 14 to the outside. As described above, even though the combustible substance is released from the battery cell, tubular body 15 and wall portion 16a which crosses an axis along an opening direction of tubular body 15 prevent the combustible substance from being directly released from drain hole 14 to the outside of battery pack 100. This configuration prevents the flame from being released from drain hole 14 of battery pack 100, and causes the combustible substance to be stored inside battery pack 100 by being reflected by the surface of tubular body 15 and wall portion 16a or another member inside the exterior can, or to be discharged to the outside in a state where the strength of the combustible substance is weakened. In particular, unlike the gas, since the combustible substance is a metal material having a mass, the combustible substance has strong straightness, is inhibited from progressing by collision, and can suppress strength. On the other hand, this configuration maintains a function of discharging the water stored in battery pack 100 to the outside through drain holes 14, providing both contradictory characteristics of discharging the water while the combustible substance is discharged.

### Tubular Body 15

As shown in FIG. 4, tubular body 15 is extended from drain hole 14 to the inside of outer case 10. Tubular body 15 has one opening end as drain hole 14 and the other opening end as the internal communication port. The inner communication port opens to the inside of outer case 10. In this example, tubular body 15 has a rectangular tubular shape. However, tubular body 15 may have a polygonal tubular shape, such as an octagonal tubular shape or a triangular tubular shape, or may have a tubular shape, such as a cylindrical shape or an elliptical tubular shape.

### Wall Portion 16

In outer case 10, wall portion 16 is disposed apart from the inner communication port in an extending direction of tubular body 15. The extending direction is directed from drain hole 14 toward the inner communication port. Tubular body 15 and wall portion 16 are made of material having excellent heat resistance. Tubular body 15 and wall portion 16 are preferably formed integrally with outer case 10. In the example shown in FIGS. 4 to 8, tubular body 15 and wall portion 16 are disposed in first case 11, but may be provided in the second case.

In the example of FIG. 8, drain holes 14a and 14b are provided on left and right side surfaces of outer case 10, respectively. Tubular bodies 15a and 15b and wall portions 16a and 16b are provided at drain holes 14a and 14b, respectively. As a result, even though the safety valve of the battery cell opens and the high-temperature and high-pressure gas or the combustible substance is released, tubular bodies 15a and 15b and wall portions 16a and 16b block a path of the gas or substance. This configuration prevents the combustible substance from being directly released to the outside of battery pack 100 from drain holes 14a and 14b, thereby enhancing safety while maintaining the configuration in which water accumulated in outer case 10 may be discharged to the outside from drain holes 14a and 14b.

In the above configuration, although the example in which one battery assembly 20 is housed in outer case 10 has been described, the present invention is not limited to this configuration, and a plurality of battery assemblies may be housed in an outer case.

### INDUSTRIAL APPLICABILITY

The battery pack of the present invention can be suitably used as a driving power source for an assist bicycle, an electric tool, an electric cleaner, an electric scooter, an electric cart, an electric automobile, and the like. The battery pack may be used in an electricity storage device or the like for home use or factory use.

### REFERENCE MARKS IN THE DRAWINGS

100, 800, 900: battery pack
1: battery cell
1a: positive electrode
1b: discharge port of safety valve
10: outer case
11: first case
12: second case
14, 14a, 14b, 814, 914: drain hole
15, 15a, 15b, 815: tubular body
16, 16a, 16b: wall portion
20: battery assembly
21: battery holder
22: sub-holder
24: lead plate
26: heat insulator
27: circuit board

## Claims

1. A battery pack comprising:
an outer case; and
one or more battery cells housed in an inside of the outer case, each of the one or more battery cells including a safety valve, wherein
the outer case has a drain hole provided in a part thereof, the drain hole communicating with an inside of the outer case,
a tubular body is extended from the drain hole to the inside of the outer case,
the tubular body has one opening and another opening end, the one opening end being the drain hole, the another opening end being an internal communication port opening to the inside of the outer case, and
a wall portion is disposed apart from the internal communication port of the drain hole in an extending direction with respect to the internal communication port, the extending direction being directed toward the internal communication port from the drain hole.

2. The battery pack according to claim 1, wherein the tubular body has a rectangular tubular shape.

3. The battery pack according to claim 1 or 2, wherein the tubular body and the wall portion are formed integrally with the outer case.

4. The battery pack according to any one of claims 1 to 3, wherein the drain hole opens to a side surface of a lower part of the outer case.

5. The battery pack according to any one of claims 1 to 4, wherein
the drain hole is provided in each of left and right side surfaces of the outer case, and
the tubular body and the wall portion are provided for the drain hole in each of left and right side surfaces of the outer case.

6. The battery pack according to any one of claims 1 to 5, further comprising:
a battery holder holding the one or more battery cells at predetermined postures; and
a plurality of lead plates electrically connected to a positive electrode terminal and a negative electrode terminal of each of the one or more battery cells on a side surface of the battery holder.

7. The battery pack according to any one of claims 1 to 6, wherein the safety valve is disposed on the positive electrode terminal side of the each of the one or more battery cells.
